# FASCICULE DE BREVET EUROPEEN

(11) **EP 1 456 131 B1**
(45) Date de publication et mention de la délivrance du brevet: **23.11.2005**
(21) Numéro de dépôt: 02805378.3
(22) Date de dépôt: 13.12.2002
(51) Int. Cl.: C02F 1/44

(54) **PROCEDE DE TRAITEMENT DE CONDENSATS BRUTS ISSUS DU SECHAGE DE BOUES ET INSTALLATION**
VERFAHREN ZUR BEHANDLUNG VON ROHKONDENSATEN AUS DER SCHLAMMTROCKNUNG UND VORRICHTUNG DAFÜR
METHOD FOR TREATING RAW CONDENSATES DERIVED FROM SLUDGE DRYING AND INSTALLATION THEREFOR

(30) Priorité: 14.12.2001 FR 0116227
(43) Date de publication de la demande: 15.09.2004
(73) Titulaire: C.G.E.A.. Onyx, 92000 Nanterre (FR)
(72) Inventeur: DUMESNIL, Catherine, F-44400 Reze (FR)
(74) Mandataire: Bentz, Jean-Paul
(86) Numéro de dépôt international: PCT/FR2002/004336
(87) Numéro de publication internationale: WO 2003/053858

(56) Documents cités:
- DE-A- 19 544 336
- FR-A- 2 729 381
- US-A- 4 053 399
- PATENT ABSTRACTS OF JAPAN vol. 008, no. 122 (C-227), 8 juin 1984 (1984-06-08) & JP 59 036587 A (EIDAI KIKAI KOGYO KK), 28 février 1984 (1984-02-28)
- PATENT ABSTRACTS OF JAPAN vol. 018, no. 176 (C-1183), 25 mars 1994 (1994-03-25) & JP 05 337470 A (KONICA CORP), 21 décembre 1993 (1993-12-21)
- STOLZENBERG K. ET AL.: "Aufbereitung von Brüdenkondensat mit der Membrantechnik" WASSER ABWASSER PRAXIS, vol. 6, no. 4, 1997, pages 36-43, XP008006245

## Description

La présente invention se rapporte à un procédé de traitement de condensats bruts issus du séchage de boues provenant d'eaux résiduaires provenant de station d'épuration d'eaux usées, et à une installation pour mettre en oeuvre ce procédé.

Plus particulièrement, le procédé de l'invention permet notamment le traitement de condensats bruts issus du séchage de boues provenant de stations d'épuration urbaines, industrielles ou agricoles.

Les boues d'épuration d'eaux usées comprennent une grande quantité d'eau, jusqu'à environ 80% de la masse totale des boues.

Actuellement le traitement des boues par séchage consiste tout d'abord à les épaissir, à les concentrer par voie chimique et/ou mécanique, puis enfin à les déshydrater à l'aide de techniques connues de séchage directe, indirecte ou mixte, avant de les incinérer éventuellement en mélange avec des ordures ménagères.

Malheureusement, de telles techniques de séchage des boues présentent différents inconvénients, tels que par exemple celui de risques importants d'explosion (séchage direct) ou encore la production de très grands volumes de condensats liquides après un séchage indirect, nécessitant alors la mise en oeuvre de moyens techniques importants de stockage et/ou de manutention avant le traitement final de ces condensats.

Ces moyens techniques consistent par exemple à les dépolluer dans une station d'épuration d'eaux usées. Mais de tels moyens nécessitent des investissements onéreux en dispositifs de stockage et d'acheminement de ces condensats effectué le plus souvent par voie routière avec les risques de pollution accidentelle qui y sont liés.

Or, les condensats issus des boues présentent un inconvénient pour l'environnement du fait du dégagement d'odeurs nauséabondes provoquées par la présence de composés soufrés et/ou de composés azotés et/ou de composés organiques volatils (tels que alcools, aldéhydes, cétones) et/ou encore d'acides gras volatils, et du fait de leur très forte charge en matières organiques (Demande Chimique en Oxygène : DCO environ 22000 mg/l) majoritairement biodégradables, et une Demande Biologique en Oxygène importante (DBO₅ environ 16000 mg/l). Ces paramètres (DBO₅ et DCO) sont des indicateurs connus de pollution.

Enfin, le pH acide (5,3 - 5,6) de ces condensats représente aussi un inconvénient vis-à-vis de l'environnement.

Les condensats bruts, présentant enfin l'inconvénient majeur de comprendre un trop gros volume d'eau pour pouvoir être envoyés directement dans le four d'un incinérateur, nécessitent un traitement intermédiaire.

Aussi, il subsiste le besoin de disposer d'un procédé de traitement, préalable à une incinération, de condensats bruts issus du séchage de boues provenant d'eaux résiduaires permettant de réduire très fortement le volume des effluents finaux à détruire par incinération, tout en éliminant la quasi-totalité des polluants chimiques présents dans les condensats bruts, et ceci sans polluer l'environnement par l'émission de composés volatiles à l'odeur nauséabonde. Le document DE 19544336 propose un procédé de filtration de condensats bruts issus du séchage de boues sur membrane d'osmose inverse. Toutefois, ce document ne prévoit pas de prétraitement desdits condensats.

L'invention a donc pour objet un procédé de traitement, préalable à une incinération, de condensats bruts issus du séchage de boues provenant d'eaux résiduaires comprenant des polluants chimiques, consistant à stocker au préalable les condensats bruts, caractérisé en ce qu'il consiste en outre à :
- prétraiter par centrifugation les condensats bruts pour séparer une phase lourde, une phase légère, une phase intermédiaire, à
- stocker la phase intermédiaire, puis à
- filtrer la phase intermédiaire sur au moins un dispositif à membranes d'osmose inverse pour séparer, d'une part, un perméat et, d'autre part, un concentrat comprenant les polluants chimiques.

Selon les termes du procédé de l'invention, la phase lourde est éventuellement constituée d'un mélange d'eau et de matières en suspension, et la phase légère essentiellement d'hydrocarbures insolubles.

Quant à la phase intermédiaire, elle comprend notamment des agents chimiques polluants pour l'environnement et pour les êtres vivants, et de l'eau en très grande quantité.

Le procédé selon l'invention présente l'avantage d'être simple et rapide d'exécution, de séparer efficacement dans un premier temps les différentes phases physiques constituant les condensats bruts, avec une première élimination des polluants, d'éliminer ensuite jusqu'à environ 98% d'azote, environ 97% de DBO₅ et environ 97% de DCO, tout en permettant d'obtenir, à l'issue du procédé, une eau chimiquement apte à pouvoir être rejetée dans un réseau d'assainissement ou bien à pouvoir être utilisée à d'autres fins, telles que dans le refroidissement de fumées.

Le procédé de l'invention présente en outre l'avantage de fournir un concentrat final ayant un volume total compris entre seulement 10 et 25% du volume de condensat classiquement obtenu selon les techniques connues jusqu'ici. Ce pourcentage est fonction du nombre d'étape de filtration effectuée sur les concentrats. Plus le nombre de filtration est élevé, plus la quantité finale en concentrat est faible.

Enfin, le procédé de l'invention permet le traitement efficace de condensats bruts provenant du séchage de boues constituées de mélanges divers, et présentant de très fortes variations concernant la nature des constituants chimiques et leur concentration.

Des mesures de la turbidité des condensats bruts incorporés dans le procédé de l'invention, effectuées avant et juste après l'étape de centrifugation, montrent que la centrifugation permet d'homogénéiser très facilement, rapidement et à moindre coût cette turbidité.

Cette variation de turbidité est provoquée par le fait que les condensats proviennent de boues d'origine très diverses, qui présentent par conséquent de très fortes variations en terme de quantité, de composition physico-chimique et d'aspect physique.

Cette homogénéisation des condensats bruts centrifugés a pour intérêt d'enlever, des condensats lors de la centrifugation, tous les constituants susceptibles d'encrasser trop rapidement les membranes d'osmose inverse, voire de les altérer en tout ou partie.

L'installation destinée à la mise en oeuvre du procédé, tel que défini précédemment, comprend au moins une première cuve de stockage, une centrifugeuse, au moins une seconde cuve de stockage et au moins un dispositif de membranes d'osmose inverse.

L'installation peut en outre comprendre au moins un préfiltre particulaire.

Dans le procédé selon l'invention et avant de filtrer la phase intermédiaire sur les membranes d'osmose inverse, cette dernière peut être préfiltrée sur au moins un préfiltre particulaire.

De préférence, les condensats bruts ont une température comprise entre 35° et 95°C, et de préférence entre 35° et 40°C en amont de l'étape de centrifugation.

Le fait d'effectuer la centrifugation des condensats à environ 35° - 40°C permet d'atteindre ensuite une séparation efficace par osmose inverse, des phases lourde, légère et intermédiaire. En effet, de manière à optimiser la filtration, la température du condensat centrifugé doit être compatible avec le dispositif de filtration par osmose inverse.

Selon l'invention, le perméat comprend essentiellement l'eau extraite de la phase intermédiaire. Cette eau est dépourvue de quasiment tous ses sels minéraux.

Ce perméat peut être ensuite dégazé de façon à en éliminer le gaz carbonique et des composés volatiles organiques nauséabonds résiduels.

Selon une variante de l'invention, il est possible de recycler au moins une partie du concentrat en vue de le mélanger à la phase intermédiaire, avant l'étape de filtration sur le dispositif à membranes d'osmose inverse. Le recyclage est un des moyens de procéder pour éviter d'obtenir de trop fortes variations de la conductivité, ou bien encore des valeurs de conductivité trop importantes, du condensat brut déjà centrifugé lorsqu'il arrive sur le dispositif à membranes d'osmose. La filtration d'effluents présentant une conductivité élevée nécessite de devoir appliquer de très forte pression transmembranaire sur les membranes d'osmose.

Aussi le recyclage défini précédemment présente l'intérêt d'appliquer seulement une pression transmembranaire, sur les membranes d'osmose inverse, inférieure ou égale à 65 bars.

En outre, l'utilisation de ce mélange constitué de la phase intermédiaire et du concentrat, évite la formation trop rapide de dépôts sur les membranes d'osmose inverse, et par conséquent leur nettoyage fréquent.

Selon une autre variante du procédé de l'invention, il est possible d'utiliser au moins deux dispositifs à membranes d'osmose inverse dont l'un d'eux travaille en haute pression, c'est-à-dire avec une pression transmembranaire choisie parmi 120, 130 et 140 bars.

La présence d'un dispositif à membrane fonctionnant en haute pression permet de limiter la quantité finale de concentrat à incinérer.

L'invention va maintenant être décrite à l'aide des exemples de réalisation qui suivent, qui sont donnés uniquement à titre indicatif et qui sont nullement limitatifs :
- la figure 1 représente une vue schématique du procédé de traitement selon l'invention,
- la figure 2 représente une vue schématique du procédé de l'invention selon une seconde variante, et
- la figure 3 représente une vue schématique du procédé de l'invention selon un troisième mode de réalisation.

Chacune de ces trois figures représente par ailleurs schématiquement les différents moyens constituant l'installation destinée à mettre en oeuvre le procédé selon l'invention.

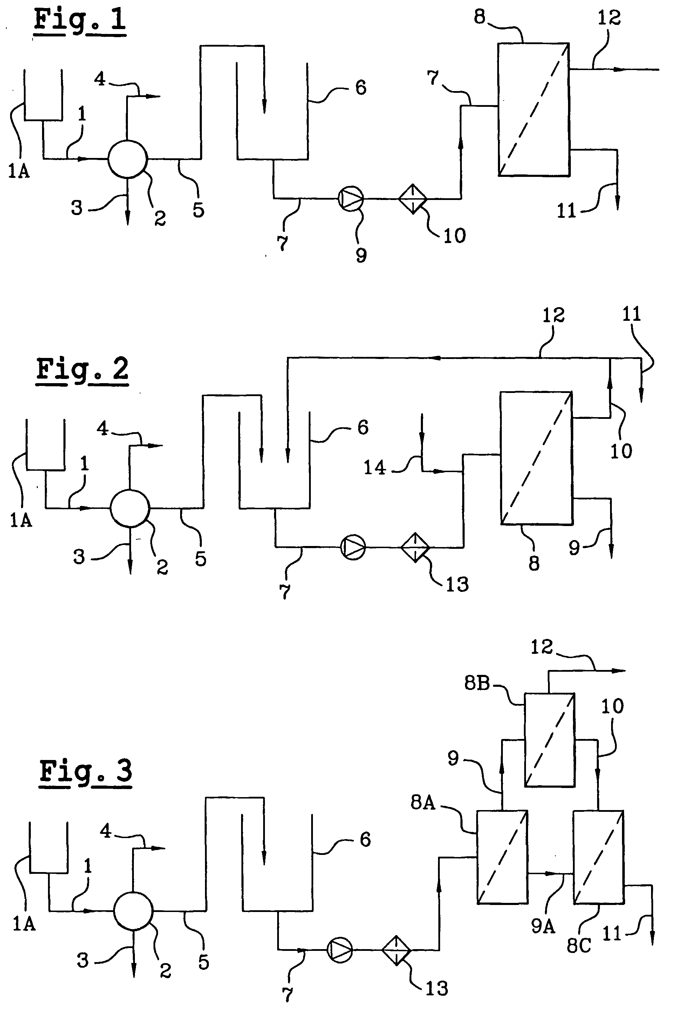

Comme indiqué sur la figure 1, les condensats bruts stockés dans une première cuve 1A sont acheminés au moyen d'une canalisation 1 vers une centrifugeuse 2. Les condensats proviennent, dans cet exemple, du séchage des boues produites par une station d'épuration. Ils comprennent notamment des matières en suspension, des hydrocarbures, de la silice, de l'azote ammoniacal et des sels divers. La température des condensats est comprises entre 35° et 40° C.

La centrifugeuse 2 est, par exemple de type séparateur auto-débourdeur, connue en tant que telle.

Elle permet, lors de la première étape du procédé, d'évacuer distinctement une phase lourde par le biais d'une canalisation 3 selon une éjection séquentielle ; la phase lourde comprenant essentiellement de l'eau et des matières en suspension.

Cette centrifugeuse 2 évacue aussi une phase légère au moyen d'une canalisation 4 ; cette phase comprenant essentiellement des corps gras et des hydrocarbures.

Et enfin, au moyen d'une canalisation 5, la centrifugeuse 2 refoule la dernière phase, dite phase intermédiaire comprenant des polluants chimiques et de l'eau.

La phase intermédiaire est refoulée sous une pression comprise entre 1 et 3 bars, en fonction du débit, vers une seconde cuve 6 de stockage, avant d'en être extraite régulièrement à l'aide d'une canalisation 7 pour être dirigée ensuite vers un dispositif 8 à membranes d'osmose inverse. Une pompe 9 de transfert disposée sur la canalisation 7 régule cette extraction.

La phase intermédiaire, dans cette illustration, passe au travers d'un préfiltre particulaire 10 disposé en amont du dispositif 8 à membranes d'osmose inverse.

La présence supplémentaire du préfiltre 10 complète la centrifugation, par une meilleure réduction du taux de particules en suspension dans la phase intermédiaire, et contribue ainsi à une meilleure protection du dispositif 8 à membranes d'osmose inverse.

Le dispositif à membranes d'osmose inverse est une unité automatique connue en tant que telle, fonctionnant, dans cet exemple, avec une pression transmembranaire égale à 65 bars. Elle peut fonctionner avec une pression allant de 45 à 65 bars.

A l'issue de cette filtration, on obtient, d'une part, un perméat extrait du dispositif 8 au moyen d'une canalisation 11 et, d'autre part, un concentrat extrait de ce dispositif 8 par une canalisation 12.

Le perméat comprend essentiellement de l'eau dépourvue d'agents polluants, et susceptible soit, d'être retournée dans le réseau d'assainissement, soit d'être utilisée comme moyen de refroidissement ou de nettoyage selon des techniques déjà connues.

Le concentrat comprend la quasi-totalité des polluants chimiques présents au départ dans les condensats bruts, et qui n'ont pas été captés par l'étape de centrifugation.

La figure 2, qui schématise un autre mode de réalisation du procédé de l'invention, montre l'arrivée des condensats bruts stockés dans une première cuve 1A au moyen d'une canalisation 1. Les conditions de traitement de ces condensats, lors de la centrifugation, sont identiques à celles de la figure 1.

Les condensats sont alors centrifugés dans une centrifugeuse 2. Cette dernière évacue une phase lourde par une canalisation 3, une phase légère par une canalisation 4, et, une phase intermédiaire par une canalisation 5.

Une seconde cuve de stockage 6 récupère la phase intermédiaire refoulée sous une pression comprise entre 1 et 3 bar.

Tout comme dans la figure 1, la phase intermédiaire est régulièrement extraite de la cuve 6 par le biais d'une canalisation 7 pour être dirigée vers un dispositif 8 à membranes d'osmose inverse.

En sortie de ce dispositif 8, on récupère un perméat extrait à l'aide d'une canalisation 9, et un concentrat par le biais d'une canalisation 10.

Cette canalisation 10 se divise ensuite en deux parties.

La première partie 11 permet d'éliminer tout ou partie du concentrat, et la seconde partie 12 permet de recycler tout ou partie du concentrat dans la cuve de stockage 6.

Cette recirculation du concentrat présente l'intérêt d'effectuer un mélange homogène, éventuellement à l'aide d'un mélangeur (non représenté), du concentrat et du condensat centrifugé de façon à éviter d'obtenir de trop fortes variations de la valeur de conductivité du mélange à filtrer mesurée à l'entrée du dispositif 8.

Un tel mélange évite par ailleurs de filtrer le mélange avec des pressions transmembranaires des membranes d'osmose inverse supérieures à 65 bars.

Une canalisation 14 permet par exemple l'injection d'au moins un inhibiteur de silice vers le dispositif 8, de façon à éviter la précipitation de silice sur les membranes d'osmose ; cette précipitation entraînant une filtration de mauvaise qualité.

Enfin, la figure 3 représente encore un autre mode de réalisation du procédé de l'invention qui se distingue de celui de la figure 1 par le fait que le dispositif 8 unique de la figure 1 est démultiplié par trois dispositifs 8A, 8B, 8C présentant les caractéristiques suivantes.

Le dispositif 8A, recevant directement le condensat centrifugé, comprend des membranes d'osmose inverse.

A la sortie de ce premier dispositif 8A, le concentrat est dirigé grâce à une canalisation 9 vers un second dispositif 8B à haute pression (130 bars) .La présence de ce dispositif 8B a pour but de limiter quantité finale de concentrat qui doit être incinéré ultérieurement selon les techniques connues.

Le perméat issu de ce premier dispositif 8a est évacué par une canalisation 9A vers un troisième dispositif 8C.

La conversion qui est définie par le rapport (volume de perméat/volume de condensat avant filtration sur membranes d'osmose inverse)× 100 est estimée à environ 50 % à la sortie du dispositif 8B. Cette conversion atteint entre environ 85 et 90 % à la sortie du dispositif 8C.

Une troisième filtration du concentrat partiellement filtré, effectuée dans le dispositif 8C, permet d'améliorer le taux de conversion, et d'atteindre environ seulement 15% de concentrat final.

Le dispositif 8b recueille, par la canalisation 9, le concentrat provenant du dispositif 8A. Une canalisation 10 évacue le perméat vers le dispositif 8C, et une canalisation 12 évacue le concentrat à incinérer.

Enfin, le dispositif 8C recueille le perméat du dispositif 8A par une canalisation 9A et, le perméat du dispositif 8B par la canalisation 10. Une canalisation 11 éjecte, enfin, le perméat final issu du dispositif 8C.

Dans les exemples fournis par les figures 2 et 3, le condensat centrifugé est préfiltré par un préfiltre particulaire 13 qui peut être constitué par exemple par au moins un filtre à sable et/ou au moins par un filtre à cartouche, avant d'être filtré sur le dispositif 8, 8A, 8B, 8C à membranes d'osmose inverse.

Le tableau I qui suit recueille les données d'analyses effectuées sur des condensats bruts non traités, et sur le perméat issu du procédé de l'invention.

Ce tableau illustre les qualités particulièrement efficace de ce procédé de dépollution des condensats.

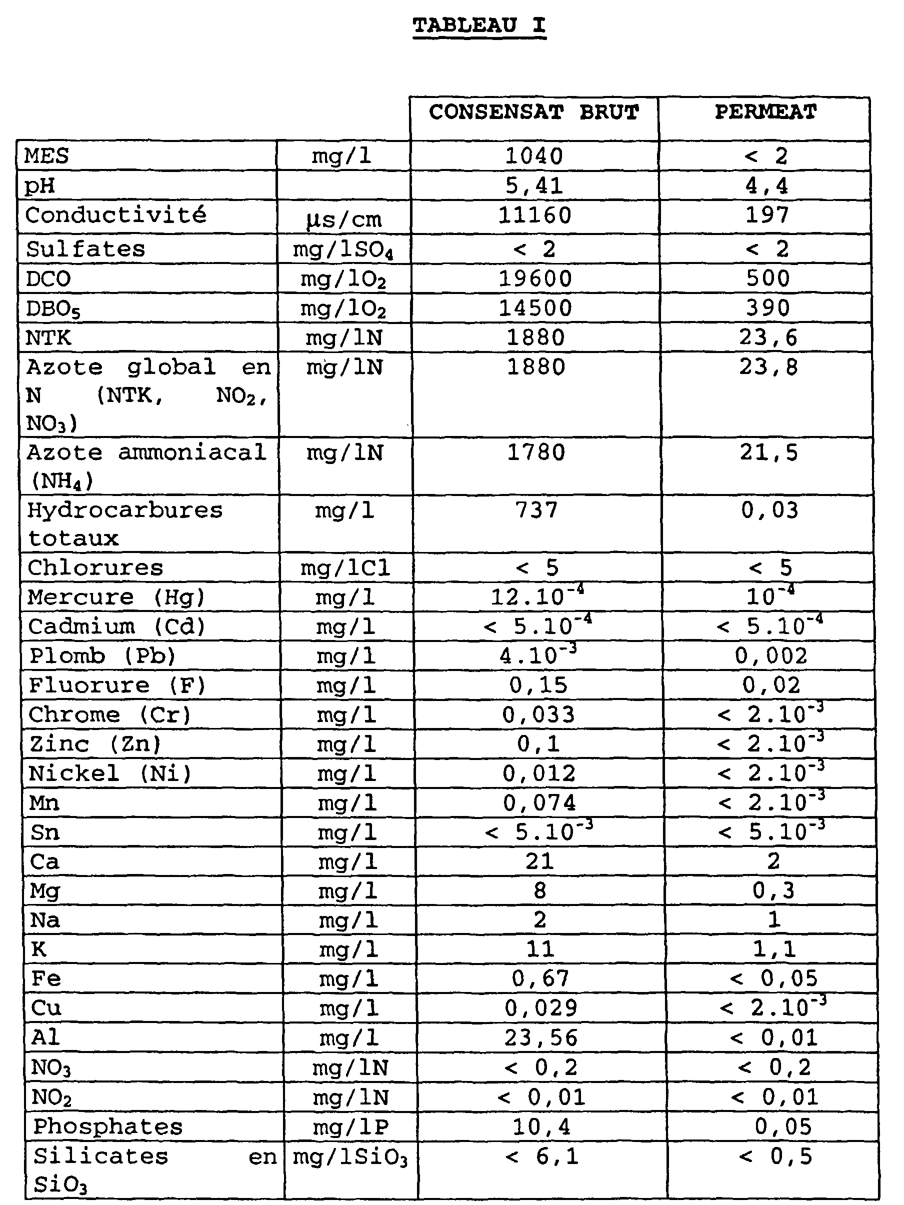

Par ailleurs, des mesures de conductivité en µS ont été effectuées à différents endroits du procédé de l'invention lors de son fonctionnement pendant quelques jours.

Ces mesures sont rassemblées dans le tableau II suivant :

**Tableau II**

| Mesures | C1 | C2 | C3 | C4 | C5 |
|---|---|---|---|---|---|
| 1 | 8050 | 7700 | | | |
| 2 | 11800 | 4200 | | | |
| 3 | 15640 | 13200 | 15480 | 15500 | 121 |
| 4 | | | 18400 | 18400 | 142 |
| 5 | 11700 | 13400 | 19600 | 19700 | 155 |
| 6 | 17600 | 16300 | 21700 | 21500 | 207 |
| 7 | 10900 | 15400 | 20000 | 20100 | 141 |
| 8 | 6400 | 8780 | 19200 | 19300 | 147 |
| 9 | 10900 | 9200 | | | 140 |
| 10 | 7800 | 9200 | 17000 | 17000 | 133 |
| 11 | 8400 | 9500 | 19700 | 19700 | 195 |
| 12 | 11300 | 11700 | | 15500 | 143 |
| 13 | 11800 | 11700 | 11400 | 11700 | 245 |
| Valeurs moyennes | 11024 | 10856 | 18053 | 17790 | 161 |

Les colonnes C1, C2, C3, C4 et C5 représentent, respectivement, la conductivité des condensats bruts non traités, celle des condensats pris à la sortie de la centrifugeuse, celle des condensats à l'entrée du préfiltre, celle des condensats à l'entrée du dispositif d'osmose inverse et, celle du perméat.

Du fait des très faibles valeurs de conductivité perméat, on peut constater que le procédé de l'invention permet de réaliser une très importante déminéralisation des condensats, et par conséquent leur dépollution efficace avant utilisations ultérieures.

Enfin des mesures de turbidité en NTU ont été réalisées en différents endroits du procédé de l'invention pendant son fonctionnement durant quelques jours.

Ces mesures sont rassemblées dans le tableau III suivant :

**Tableau III**

| Mesures | C1 | C2 | C3 | C4 |
|---|---|---|---|---|
| 1 | 3000 | 78 | | |
| 2 | 3000 | 44 | | |
| 3 | 3000 | 144 | 111 | 75 |
| 4 | | | 124 | 95 |
| 5 | 3000 | 188 | 120 | 120 |
| 6 | 3000 | 80 | 170 | 160 |
| 7 | 3000 | 23 | 147 | 131 |
| 8 | 350 | 29 | 122 | 107 |
| 9 | 750 | 20 | | |
| 10 | 630 | 49 | 90 | 91 |
| 11 | 1140 | 89 | 166 | 144 |
| 12 | 570 | 15 | | 76 |
| 13 | 705 | 46 | 36 | 49 |
| Valeurs moyennes | 1845 | 67 | 120 | 105 |

Les colonnes C1, C2, C3 et C4 représentent, respectivement, la turbidité des condensats bruts non traités, celle des condensats pris à la sortie de la centrifugation, celle des condensats à l'entrée du préfiltre, et celle des condensats à l'entrée du dispositif d'osmose inverse.

On peut noter qu'à l'issue de l'étape de centrifugation, les condensats présentent une diminution des valeurs de turbidité, ainsi qu'une certaine homogénéisation de ces valeurs.

## Revendications

1. Procédé de traitement, préalable à une incinération, de condensats bruts issus du séchage de boues provenant d'eaux résiduaires comprenant des polluants chimiques, consistant à stocker au préalable les condensats bruts, **caractérisé en ce qu'**il consiste en outre à
- prétraiter par centrifugation les condensats bruts pour séparer une phase lourde, une phase légère, une phase intermédiaire, à
- stocker la phase intermédiaire, puis à
- filtrer la phase intermédiaire sur au moins un dispositif à membranes d'osmose inverse pour séparer, d'une part, un perméat et, d'autre part, un concentrat comprenant les polluants chimiques.

2. Procédé selon la revendication 1, **caractérisé en ce qu'**avant de filtrer la phase intermédiaire sur les membranes d'osmose inverse, la phase intermédiaire est préfiltrée sur au moins un préfiltre particulaire.

3. Procédé selon la revendication 1, **caractérisé en ce que** les condensats bruts ont une température comprise entre 35 et 95°C, et de préférence entre 35° et 40°C, en amont de l'étape de centrifugation.

4. Procédé selon la revendication 1, **caractérisé en ce que** le perméat est dégazé en vue d'en éliminer le gaz carbonique et des composés volatils organiques nauséabonds résiduels.

## Patentansprüche

1. Verfahren zur Behandlung, vor einer Verbrennung zu Asche, von Rohkondensaten aus der Trocknung von Schlämmen, die von Abwässern mit chemischen Verunreinigungen stammen, welches darin besteht, die Rohkondensate vorher zu lagern, **dadurch gekennzeichnet, dass** es ferner besteht in
- Vorbehandeln durch Zentrifugation der Rohkondensate zum Trennen einer schweren Phase, einer leichten Phase und einer zwischen liegenden Phase,
- die zwischen liegende Phase zu lagern, dann
- die zwischen liegende Phase auf wenigstens einer Umkehrosmose-Membranenvorrichtung zu filtrieren, um einerseits ein Permeat und andererseits ein Konzentrat mit den chemischen Verunreinigungen zu trennen.

2. Verfahren nach Anspruch 1, **dadurch gekennzeichnet, dass** vor dem Filtrieren der zwischen liegenden Phase auf den Umkehrosmose-Membranen die zwischen liegende Phase auf wenigstens einem Partikelfilter vorfiltriert wird.

3. Verfahren nach Anspruch 1, **dadurch gekennzeichnet, dass** die Rohkondensate eine zwischen 35 und 95°C, und vorzugsweise zwischen 35° und 40° liegende Temperatur vor dem Schritt der Zentrifugation haben.

4. Verfahren nach Anspruch 1, **dadurch gekennzeichnet, dass** das Permeat entgast wird, um das Kohlendioxid und die flüchtigen, übel riechenden, organischen Restverbindungen zu beseitigen.

## Claims

1. Method of treating, prior to incineration, untreated condensates resulting from the drying of sludge coming from effluent comprising chemical pollutants, consisting of first storing the untreated condensates, **characterised in that** it also consists of
- pretreating the untreated condensates by centrifugation in order to separate a heavy phase, a light phase and an intermediate phase,
- storing the intermediate phase, and then
- filtering the intermediate phase on at least one reverse-osmosis membrane device in order to separate on the one hand a permeate and on the other hand a concentrate comprising the chemical pollutants.

2. Method according to claim 1, **characterised in that**, before filtering the intermediate phase on the reverse-osmosis membranes, the intermediate phase is prefiltered on at least one particulate prefilter.

3. Method according to claim 1, **characterised in that** the untreated condensates have a temperature of between 35° and 40°C, upstream of the centrifugation step.

4. Method according to claim 1, **characterised in that** the permeate is degassed with a view to eliminating therefrom the carbon dioxide and any residual foul-smelling volatile organic compounds.
